(19) Europäisches Patentamt
European Patent Office
Office européen des brevets

(11) Numéro de publication: **0 109 342 B2**

(12) **NOUVEAU FASCICULE DE BREVET EUROPEEN**

(45) Date de publication du nouveau fascicule du brevet: **03.05.89**

(51) Int. Cl.⁴: **C 08 L 77/08**

(21) Numéro de dépôt: **83420144.4**

(22) Date de dépôt: **02.09.83**

(54) **Compositions de moulage à base de copolyamides semi-rigides dérivés de dimères d'acides gras, d'élastomères et éventuellement de polyamides conventionnels.**

(30) Priorité: **06.09.82 FR 8215271**

(43) Date de publication de la demande:
**23.05.84 Bulletin 84/21**

(45) Mention de la délivrance du brevet:
**17.09.86 Bulletin 86/38**

(45) Mention de la décision concernant l'opposition:
**03.05.89 Bulletin 89/18**

(84) Etats contractants désignés:
**AT BE CH DE FR GB IT LI LU NL SE**

(56) Documents cités:
**EP-A- 0 000 583**
**EP-A- 0 003 126**
**EP-A- 0 023 667**
**EP-A- 0 031 287**
**EP-A- 0 034 704**
**FR-A- 2 407 227**
**FR-A- 2 459 810**
**US-A- 2 468 534**
**US-A- 2 516 741**
**US-A- 3 240 734**
**US-A- 4 299 744**

(73) Titulaire: **RHONE-POULENC CHIMIE, 25, quai Paul Doumer, F-92408 Courbevoie Cédex (FR)**

(72) Inventeur: **Giroud-Abel, Bruno 7-9 Chemin de Charrière Blanche, Résidence de Parc des Cèdres Bat C, F-69130 - Ecully (FR)**
Inventeur: **Goletto, Jean, Le Joli Mai 2 rue Tramier, F-69130 - Ecully (FR)**

(74) Mandataire: **Trolliet, Maurice et al, RHONE-POULENC INTERSERVICES Service Brevets Chimie Centre de Recherches de Saint-Fons B.P. 62, F-69192 Saint-Fons Cédex (FR)**

**EP 0 109 342 B2**

ACTORUM AG

## Description

La présente invention concerne des compositions comprenant à titre de constituants obligatoires un copolyamide semi-rigide et au moins un élastomère approprié ayant d'excellentes propriétés de souplesse et de résilience notamment à basses températures. La présente invention concerne également des procédés de préparation de ces compositions, des moyens destinés à la mise en œuvre de ces procédés et les objets moulés obtenus par moulage de ces compositions.

Les polyamides sont connus depuis longtemps pour leurs excellentes caractéristiques mécaniques, une très bonne résistance à la chaleur et à l'abrasion et aussi un excellent aspect de surface. Les polyamides moulés ou extrudés ont trouvé de nombreuses applications dans les appareils et machines à usage domestique ou industriel, l'industrie électronique, les pièces d'automobiles, les engrenages, etc. Il existe cependant certaines applications particulières dans lesquelles on a besoin de polyamides ayant une souplesse supérieure à celle des polyamides conventionnels tels que le nylon 6,6 (polymère d'hexaméthylène diamine et d'acide adipique) ou le nylon 6 (polymère d'ε-caprolactame); comme domaines d'application où ce besoin existe, on citera par exemple la fabrication de semelles de chaussures, de colliers de serrage utilisés dans l'industrie électrique, de garnitures intérieures, de tuyaux flexibles utilisés dans l'industrie automobile. Des polyamides qui conviennent pour ces applications sont connus et décrits par exemple dans FR-A 2 407 227 et dans FR-A 2 459 810. Les polyamides conformes au brevet français précité sont préparés en mettant en œuvre un mélange comprenant 5 à 60% en poids d'un sel de dimère d'acide gras particulier et d'hexaméthylènediamine et 95 à 40% en poids de caprolactame, ledit sel étant sous forme d'une solution dans un solvant particulier à base d'un mélange eau-alcool ayant moins de 5 atomes de carbone, d'un mélange eau-caprolactame ou de caprolactame lui-même. Les acides dimères employés sont obtenus par polymérisation de mélanges comprenant une quantité majoritaire d'acides gras monomères ayant de 16 à 20 atomes de carbone et une quantité minoritaire d'acides gras monomères ayant de 8 à 15 et/ou de 21 à 24 atomes de carbone. De plus, le procédé de préparation est conduit de manière à ce que la stoechiométrie du sel soit établie rigoureusement en mesurant le pH du sel en solution dans un millieu solvant bien défini qui n'est pas obligatoirement le même que celui utilisé lors de la préparation du mélange réactionnel. Les polyamides conformes à la demande de brevet français précitée sont préparés à partir de dimères d'acides gras du type de ceux définis ci-avant, d'acide adipique et d'hexaméthylènediamine en veillant à ce que le rapport molaire en acide adipique par rapport aux acides totaux soit compris entre 0,5 et 0,99 et en mettant en œuvre une série d'opérations dans des conditions de température et de pression qui sont choisies de manière à obtenir des copolymères homogènes ne présentant qu'une seule phase à l'état fondu ou à l'état solide.

Les expériences que la demanderesse a conduit avec les copolyamides semi-rigides conformes aux brevet ou demande de brevet précités montrent toutefois que leur souplesse (mesurée de manière habituelle par la valeur des modules en flexion et en torsion) et leur résistance au choc qui se situent à un niveau satisfaisant à température ambiante sont par contre fortement réduites lorsque les articles moulés qui sont examinés sont soumis à de basses températures comme celles allant de 0 à −40 °C. Il s'agit là d'un inconvénient de nature à freiner considérablement le développement de ces articles en polyamides semi-rigides dans certains marchés comme celui des sports et loisirs.

Il est connu d'incorporer des plastifiants dans les polyamides pour augmenter leurs propriétés de souplesse et de résilience. Cette technique toutefois n'apporte pas de solutions satisfaisantes. En effet la plupart des plastifiants appropriés aux matières plastiques ne sont pas suffisamment compatibles avec les polyamides et se séparent partiellement par migration lors de la transformation; de plus ces plastifiants qui sont capables d'abaisser à température ambiante les modules en flexion et en torsion et d'augmenter la résistance aux chocs, sont par contre inopérants en général et même nocifs vis-à-vis des caractéristiques de résilience à des températures inférieures à 0° C.

Il a maintenant été trouvé que l'on pouvait diminuer les modules en flexion et en torsion (donc améliorer la souplesse) et augmenter la résilience des polyamides semi-rigides notamment à de basses températures, sans diminuer certaines autres propriétés importantes pour l'ouvrabilité et l'usage des matériaux comme par exemple l'aptitude à la cristallisation, la reprise de rigidité à la transformation, la stabilité dimensionnelle, en incorporant dans la matrice polyamide des élastomères de nature appropriée.

La présente invention concerne donc des compositions pour moulage à base de polyamide ayant d'excellentes propriétés de souplesse et de résilience notamment à des températures aussi basses que celles allant de 0 à −40° C, caractérisées en ce qu'elles comprennent à titre de constituants obligatoires:

(1) un copolyamide semi-rigide préparé à partir de dimères d'acides gras, qui est défini dans la revendication 1

(2) et au moins un élastomère comportant des séquences compatibles ou réactives avec le copolyamide (1) appartenant au groupe constitué par:

(a) des copolymères oléfiniques dérivant d'une α-oléfine aliphatique comportant de 2 à 6 atomes de carbone et d'au moins un composé appartenant à la classe des mono- ou diacides carboxyliques α,β-insaturés comportant de 3 à 8 atomes

de carbone, les esters d'alkyles inférieurs et les anhydrides dérivés de ces acides;

(b) des copolymères oléfiniques contenant des groupes carboxyles et/ou carboxylates et dérivant d'éthylène et d'au moins une α-oléfine ayant de 3 à 6 atomes de carbone;

(c) des copolymères oléfiniques contenant des groupes carboxyles et/ou carboxylates et dérivant d'éthylène, d'au moins une α-oléfine ayant de 3 à 6 atomes de carbone et d'au moins un diène aliphatique non conjugué comportant au moins 5 atomes de carbone;

(d) des copolyesteramides obtenus à partir (i) d'un composé acide comprenant 1 à 100% en mole d'un diacide ou dérivé ayant de 15 à 60 atomes de carbone et 0 à 99% en mole d'au moins un autre réactif difonctionnel choisi parmi des diacides, des aminoacides, des hydroxyacides et leurs dérivés formateurs d'esters ou d'amides, des composés ayant un nombre d'atomes de carbone au plus égal à 12 (ii) d'un composé dihydroxylé pouvant être un diol linéaire, ramifié ou cyclique ayant de 2 à 8 atomes de carbone et/ou un composé dihydroxylé macromoléculaire ayant un poids moléculaire compris entre 500 et 5000 comme les polyoxyéthylèneglycols, les polytétrahydrofurannes, les polyoxypropylèneglycols et (iii) un composé aminé comprenant au moins une diamine et/ou au moins un aminoalcool ayant un nombre d'atomes de carbone au plus égal à 25, le composé (III) pouvant être omis dans le cas où le composé acide (i) renferme déjà un réactif aminé;

(e) des polyuréthanes obtenus à partir (i) d'un polyester aliphatique et/ou d'un polyéther aliphatique à terminaison hydroxyle ayant un poids moléculaire compris entre 500 et 4000, (ii) d'un diol aliphatique comportant 2 à 8 atomes de carbone et éventuellement un substituant du type nitro-, chloro-, bromo- ou fluoro- et (iii) d'un diisocyanate aromatique;

(f) des copolymères séquencés organopolysiloxaniques et polyuréthanes obtenus par réaction entre (i) un macrodiol polysiloxanique (ou un macrodiisocyanate polysiloxanique) issu de la réaction entre un α,ω-hydrogénopolysiloxane de formule:

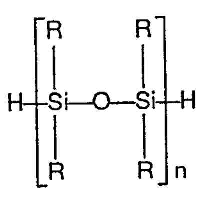

dans laquelle n est un nombre compris entre 10 et 80 et les substituants R, identiques ou différents, représentent des groupes méthyles, vinyles ou phényles, et un monoalcool primaire éthylénique (ou un monoisocyanate éthylénique) et (ii) un diol court et un diisocyanate court;

(g) des copolymères de monomères insaturés, présentant au moins une phase élastomérique, obtenus sous forme de particules de dimensions comprises entre 0,05 et 1,5 μm par polymérisation en émulsion à partir d'un acrylate d'alkyle, d'un méthacrylate d'alkyle ou d'un diène aliphatique conjugué, d'au moins un co-monomère insaturé porteur d'une fonction acide carboxylique ou dérivée, amine ou dérivée, nitrile, acide sulfonique ou dérivée et éventuellement d'au moins un autre comonomère à insaturation éthylènique;

la quantité de phase élastomérique (2), qui peut comprendre un ou plusieurs élastomères, représentant 4% à 60% du poids de l'ensemble copolyamide semi-rigide (1) + phase élastomérique (2).

Comme polyamides semi-rigides, on met en œuvre de préférence les copolyamides qui sont décrits dans FR-A 2 407 227 et dans FR-A 2 459 810 dont on a parlé ci-avant. Parmi ces copolyamides, on mentionnera tout particulièrement ceux qui sont issus de dimères d'acides gras répondant à la définition donnée ci-avant dans lesquels la fraction en dimère est supérieure à 95% en poids, la fraction en monomère est inférieure à 0,5% en poids, le reste étant de fonctionnalité supérieure à 2.

Comme élastomères (2a), on met en œuvre de préférence des copolymères dérivant d'éthylène et d'au moins un composé comprenant l'acide acrylique, l'acide méthacrylique, l'acide maléique, l'acide fumarique, l'acide itaconique, les esters d'alkyles inférieurs et les anhydrides dérivés de ces acides. Ces copolymères comprennent en général 60 à 98% et de préférence 70 à 95% en mole de motifs provenant de 1'α-oléfine et 40 à 2% et de préférence 30 à 5% en mole de motifs provenant du (ou des) composé(s) acide(s) (acide lui-même et/ou dérivé). A titre d'exemples de copolymères de ce type qui conviennent bien, on citera: les copolymère éthylène-acide acrylique, éthylène-acide méthacrylique, éthylène-acide acrylique-méthacrylate de méthyle.

Comme élastomères (2b), on met en œuvre de préférence des copolymères dérivant d'éthylène et de propylène. L'introduction des groupes carboxyles et/ou carboxylates peut-être faite: soit par copolymérisation directe du mélange éthylène-α-oléfine ayant de 3 à 6 atomes de carbone avec au moins un composé insaturé appartenant à la classe des diacides carboxyliques α,β-insaturés comportant de 4 à 8 atomes de carbone (acide maléique, acide fumarique, acide itaconique), les esters d'alkyles inférieurs et les anhydrides dérivés de ces acides; soit par greffage du (ou des) composé(s) acide(s) (acide et/ou dérivé) sur la base oléfinique induit par ionisation, par hydroperoxydation ou sous l'effet de la chaleur et de la pression. Pour préparer de pareils copolymères, on utilise en général des quantités de réactifs telles que le rapport molaire éthylène/ α-oléfine soit compris entre 9/1 et 1/9 et de préférence entre 5/1 et 2/1 et que le pourcentage molaire du (ou des) composé(s) acide(s) (acide et/ou dérivé) par rapport à l'ensemble des réactifs soit compris entre 1% et 30%. A titre d'exemples des copolymères de ce type qui conviennent bien, on citera:

les copolymères éthylène-propylène greffé anhydride maléique, éthylène-propylène greffé acide fumarique.

Comme élastomères (2c), on met en œuvre de préférence des copolymères dérivant d'éthylène, de propylène et d'un diène comme l'hexadiène-1,4, le norbornadiène-2,5, l'octadiène-1,7. L'introduction des groupes carboxyles et/ou carboxylates est faite en traitant le mélange éthylène-α-oléfine-diène de la manière indiquée ci-avant dans le cas du mélange éthylène-α-oléfine. Pour préparer de pareils copolymères, on utilise en général des quantités de réactifs telles que le rapport molaire éthylène/-α-oléfine soit compris entre 9/1 et 1/9 et de préférence entre 5/1 et 2/1, que le pourcentage molaire du diène par rapport à l'ensemble éthylène + α-oléfine soit compris entre 0,2% et 5% et de préférence entre 0,75% et 2% et que le pourcentage molaire du (ou des) composé(s) acide(s) (acide et/ou dérivé) par rapport à l'ensemble des réactifs soit compris entre 0,05% et 5%. A titre d'exemple de copolymères de ce type qui conviennent bien, on citera: les copolymères éthylène-propylène-hexadiène-1,4 greffé anhydride maléique et éthylène-propylène-hexadiène-1,4 greffé acide fumarique.

Les copolyesteramides (2d) qui peuvent être utilisés ici sont décrits dans FR-A 2 471 394. On met en œuvre de préférence des copolyesteramides dans lesquels la proportion pondérale de motifs esters est comprise entre 50 et 80% en poids et les diacides ayant de 15 à 60 atomes de carbone sont des dimères d'acides gras correspondant à la définition donnée ci-avant à propos des dimères utilisés pour préparer les copolyamides mis en œuvre dans la présente invention. Comme copolyesteramides de ce type qui conviennent bien, on citera les composés tels qu'ils sont décrits aux exemples 1 à 10 de la demande française précitée.

Les polyuréthanes (2e) qui peuvent être utilisés ici sont décrits par exemple dans US-A 2 729 618 et US-A 3 475 383 et dans le BE-A 698 558. Conviennent bien par exemple les polymères de ce type qui sont mis dans le commerce par la Société Goodrich sous la marque «Estane®», par la Société Bayer sous la marque «Desmopan®», par la Société BASF sous la marque «Elastolan®», par la Société Upjohn sous la marque «Pellethane®».

Les copolymères organopolysiloxaniques et polyuréthanes (2f) qui peuvent être utilisés encore ici sont décrits dans FR-A 2 513 644. On met en œuvre de préférence des copolymères dans lesquels:

- 1'-α,ω-hydrogénopolysiloxane est un α,ω-hydrogénopolydiméthylsiloxane,
- le monoalcool primaire éthylénique est un composé par exemple de formule:

$CH_2{=}CH{-}CH{-}CH_2{-}OH$
$CH_2{=}CH{-}CH_2{-}CH_2OH$
$C_2H_5{-}CH{=}CH{-}CH_2OH$
$CH_2{=}C(CH_3){-}CH_2OH$
$CH_3{-}CH{=}C(CH_3){-}CH_2OH$

- le monoisocyanate éthylénique est un composé par exemple de formule:
$CH_2{=}CH{-}CH_2{-}NCO$

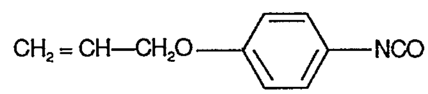

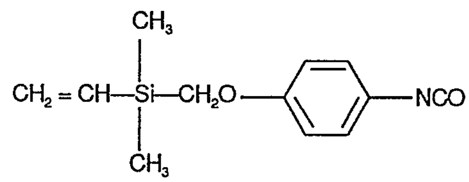

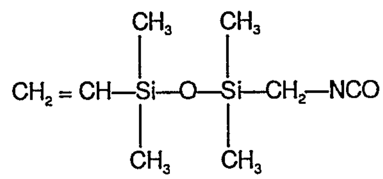

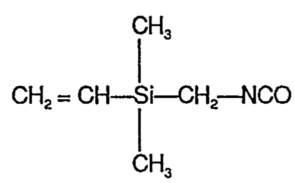

- le diol court est par exemple un composé comme le butanediol-1,4, l'hexanediol-1,6, - le diisocyanate court est par exemple un composé comme le diisocyanato-1,6-hexane, le diisocyanatotoluène, le bis-isocyanato-4,4'-diphénylméthane.

Comme copolymères (2f) qui conviennent bien, on citera les composés tels qu'ils sont décrits aux exemples 1 à 14 de la demande française précitée.

Les copolymères (2g) utilisables encore ici peuvent être obtenus en une étape par copolymérisation en émulsion du mélange des monomères constitutifs. Ce mélange comprend en général:

- de 50% à 99% en poids d'un acrylate d'alkyle, d'un méthacrylate d'alkyle, ou d'un diène aliphatique conjugué,
- de 1% à 50% en poids d'au moins un comonomère insaturé porteur d'une fonction acide carboxylique ou dérivée, amine ou dérivée, nitrile, acide sulfonique ou dérivée,
- de 0% à 49% en poids d'au moins un autre comonomère à insaturation éthylénique, et il est prévu pour conduire à un copolymère dont la température de transition vitreuse est inférieure à −25 °C. Ces copolymères étant difficiles à obtenir sous forme de poudre fine à partir de latex, ils seront, dans le cadre de la présente invention, mis en œuvre de préférence sous forme de latex et introduits dans le milieu de polycondensation du copolyamide semi-rigide. On préfère mettre en œuvre des copolymères de ce type renfermant de 1% à 10% d'au moins un co-monomère fonctionnalisé.

Les copolymères (2g) peuvent également être obtenus en plusieurs étapes de polymérisation en émulsion et présenter une structure dite «cœur-peau». Dans ce cas, ils sont obtenus par polymérisation en émulsion d'une première phase élastomèrique (cœur) obtenue par réaction du mélange M1 comprenant:

- de 50% à 100% en poids d'un acrylate d'alkyle, d'un méthacrylate d'alkyle ou d'un diène aliphatique conjugué,
- de 0% à 50% en poids d'au moins un autre comonomère à insaturation éthylénique,

suivi d'un greffage par polymérisation en émulsion, sur le «cœur» élastomérique, d'au moins une autre phase polymérique obtenue par réaction du mélange M2 comprenant:

- de 10% à 100% en poids d'au moins un monomère insaturé porteur d'une fonction acide carboxylique ou dérivée, amine ou dérivée, nitrile, ou acide sulfonique ou dérivée,
- de 0% à 90% en poids d'au moins un autre comonomère à insaturation éthylénique.

Dans le cadre de la présente invention, on préfère des copolymères greffés de ce type dans lesquels la partie «cœur» élastomérique (M1) représente de 50% à 90% en poids de la composition totale et dans lesquels au moins 50% de la partie greffée (M2) est obtenue à partir de monomère conduisant par homopolymérisation à des polymères présentant une température de transition vitreuse supérieure à 20°C. Ces copolymères peuvent être facilement mis sous forme d'une poudre fine par coagulation du latex et séchage.

Dans la définition donnée ci-avant des copolymères (2g):

- l'acrylate ou le méthacrylate d'alkyle est de préférence un ester dérivé d'alcools aliphatiques ayant de 2 à 6 atomes de carbone, comme par exemple l'acrylate ou le méthacrylate de butyle,
- le diène aliphatique conjugué comporte de préférence de 4 à 8 atomes de carbone, comme par exemple le butadiène-1,3,
- les co-monomères insaturés fonctionnalisés sont par exemple: l'acide maléique, l'acide fumarique, l'acide acrylique, l'acide méthacrylique, le méthacrylate de méthyle, l'anhydride maléique, l'acrylamide, l'acrylonitrile, l'acide vinyl-4 benzènesulfonique,
- les autres co-monomères à insaturation éthylénique sont par exemple: le styrène, le méthacrylate de méthyle.

Des copolymères du type (2g) sont décrits notamment dans US-A 3 668 274, US-A 3 796 771, US-A 4 086 300 et US-A 4 148 846.

On a constaté et ceci constitue un autre objet de la présente invention qu'il peut être avantageux d'introduire aussi dans les compositions de l'invention, à côté du copolyamide semi-rigide (1) et de la phase élastomérique (2), un polyamide conventionel (3). La quantité de phase élastomérique (2) représente alors dans ce cas 4% à 60% du poids de l'ensemble copolyamide semi-rigide (1) + phase élastomérique (2) + polyamide conventionnel (3). Par polyamide conventionnel, rappelons que l'on entend définir essentiellement les produits obtenus par polycondensation de diacides autres que des dimères d'acides gras et de diamines ou par homopolycondensation d'aminoacides ou encore par polymérisation de lactames. Des espèces représentatives sont constituées par exemple par: le nylon 6,6 (polymère d'hexaméthylène-diamine et d'acide adipique), le nylon 6,10 (polymère d'hexaméthylène-diamine et d'acide sébacique), le nylon 6 (polymère d'ε-caprolactame), le nylon 7 (polymère d'acide aminononanoïque), le nylon 9 (polymère d'acide aminononanoïque), le nylon 11 (polymère d'acide ω-aminoundécanoïque), le nylon 12 (polymère d'acide aminododécanoïque), et les mélanges de ces polymères.

La quantité de polyamide conventionnel (3) qui peut être mise en œuvre représente habituellement 5 à 85% et de préférence 10 à 50% du poids de l'ensemble copolyamide semi-rigide (1) + polyamide conventionnel (3).

A propos de la quantité de phase élastomérique qui peut comprendre un ou plusieurs élastomères, on a constaté que des compositions comprenant 10% à 40% en poids d'élastomère(s), par rapport à l'ensemble copolyamide semi-rigide (1) + renfort élastomérique (2) + éventuellement polyamide conventionnel (3), conviennent bien en général.

Les compositions selon la présente invention peuvent bien entendu être modifiées par l'ajout d'un ou plusieurs additifs tels que: des agents de stabilisation comme des inhibiteurs de dégradation par oxydation, par la chaleur ou par le rayonnement ultraviolet, des lubrifiants et des agents de démoulage, des matières colorantes comprenant les colorants et les pigments, des agents de nucléation, des plastifiants.

Les agents de stabilisation peuvent être incorporés dans la composition à un stade quelconque de sa préparation. De préférence, les stabilisants sont inclus assez tôt pour empêcher un début de dégradation avant que la composition puisse être protégée. Ces stabilisants doivent être compatibles avec la composition.

Les agents de stabilisation à l'oxydation et à la chaleur utiles dans les matières de la présente invention comprennent ceux utilisés généralement dans les polyamides. Ils comprennent par exemple, jusqu'à 1% en poids par rapport à la matrice polyamide [copolyamide (1) + éventuellement polyamide conventionnel (3)]: des halogénures de métaux du groupe I, par exemple de sodium, de potassium, de lithium; des halogénures cuivreux comme par exemple, du chlorure, du bromure, de l'iodure cuivreux; des phénols stériquement empêchés; des hydroquinones; des phosphites organiques ou minéraux; et divers membres substitués de ces groupes et leurs combinaisons.

Les agents de stabilisation à l'ultraviolet, utilisés par exemple dans une proportion allant jusqu'à 2% par rapport au poids de la matrice polyamide, peuvent aussi être ceux utilisés habituellement avec les polyamides. Comme exemples, on peut mentionner divers résorcinols substitués, salicylate, benzotriazoles, benzophénones, des amines aromatiques encombrées et de dérivés de pipéridines substituées.

On peut aussi utiliser des composés antioxydants de type connus comme les amines aromatiques substituées. Un exemple de tel composé est le 4,4-bis(α-α'-diméthylbenzyl)-diphénylamine.

Des lubrifiants et agents de démoulage utilisables, dans une proportion allant jusqu'à 2% par rapport au poids de la composition, sont par exemple l'acide stéarique et ses sels minéraux, l'alcool stéarique, les stéréamides, les cires esters.

Des colorants organiques et des pigments, par exemple le bioxyde de titane, le noir de carbone, peuvent être utilisés à des taux alllant jusqu'à 5% par rapport au poids de la composition.

Les compositions peuvent aussei contenir des agents nucléants comme par exemple du talc, du fluorure de calcium, du phényl phosphinate de sodium, de l'alumine et du polytétrafluoroéthylène finement divisé et des agents plastifiants, dans des proportions allant jusqu'à environ 20% par rapport au poids de la composition, comme par exemple du phtalate de dioctyle, du phtalate de dibenzyle, du phtalate de butyle et de benzyle, des huiles d'hydrocarbures, du N,n-butylbenzène sulfonamide, de l'ortho et du para toluène-éthyl sulfonamide.

Le copolyamide semi-rigide (1), le ou les élastomère(s) choisi(s) (2), et éventuellement le polyamide conventionnel (3) ainsi d'ailleurs que les additifs éventuels utilisés peuvent être mélangés directement d'une manière quelconque permettant une bonne homogénéisation. De manière préférable on réalise le mélange des divers ingrédients sous forme de poudre ou granulés en opérant d'abord à froid un malaxage dans un mélangeur classique, puis en homogénéisant ensuite l'ensemble en opérant à chaud dans un dispositif capable de développer des forces de cisaillement adéquates, comme par exemple une extrudeuse à une ou plusieurs vis. Les forces de cisaillement adéquates dont on vient de parler sont des forces de ce type permettant de disperser dans la matrice de polyamide(s) le (ou les) élastomère(s) en particules de dimensions comprises entre 0,01 et 10 μm et de préférence entre 0,05 et 5 μm.

A l'issue de ce traitement, les compositions de l'invention se présentent en général sous la forme de joncs qui sont ensuite découpés en granulés; ces granulés seront utilisés ultérieurement pour le formage des articles souhaités en opérant dans les appareils classiques de moulage par injection, par transfert ou par extrusion.

Les compositions selon l'invention peuvent être préparées encore, et il s'agit à d'un mode opératoire très avantageux, en confectionnant d'abord un mélange-maître sous forme de granulés à base d'une partie du copolyamide semi-rigide (1) et du (ou des) élastomère(s) choisi(s) (2) qui sera mélangé ensuite, avant mise en œuvre, avec des granulés du reste du copolyamide (1) à modifier. Cette méthode présente un interêt car on peut ainsi obtenir des compositions selon l'invention dont les caractéristiques sont à leur valeur optimale même en travaillant sur du matériel de transformation conventionnel comme les extrudeuses monovis de pouvoir dispersif moins important que les extrudeuses doublevis comme par exemple une extrudeuse de type ZSK.

Ce mode opératoire passant par la préparation intermédiaire d'un mélange-maître peut être mis en œuvre également en utilisant le polyamide conventionnel (3) pour réaliser le pré-mélange du (ou des) élastomère(s). On a observé dans ce cadre que l'emploi d'un polyaminoacide issu de l'homopolycondensation d'aminoacides ou de la polymérisation de lactames est alors une mesure particulièrement recommandée pour confectionner le mélange-maître. Les nylons 6, 7, 9 et 11 conviennent tout spécialement bien à cet effet.

Le mélange-maître, quand on choisit d'en utiliser un, contient en général 30 à 70% en poids de polyamide [une partie du copolyamide semi-rigide (1) ou le polyamide conventionnel (3)] et 70 à 30% en poids d'élastomère(s) (2). De manière préférentielle, il renferme 50 à 60% en poids de polyamide et 50 à 40% en poids d'élastomère(s).

La quantité de mélange-maître qui est généralement utilisée pour faire la composition finale selon l'invention, exprimée par le pourcentage en poids de mélange-maître dans la composition finale mélange-maître + copolyamide (1) à modifier, est comprise entre 20 et 90%. De préférence, lorsque le polyamide du mélange-maître est un polyamide semi-rigide (1), cette quantité est comprise entre 30 et 80% et, lorsque le polyamide du mélange-maître un polyamide conventionnel (3), cette quantité est comprise entre 30 et 60%.

Une autre méthode encore de préparation des compositions de l'invention peut consister à polymériser les monomères formant le copolyamide semi-rigide en présence de l'élastomère mis en œuvre, la polymérisation pouvant avoir lieu dans le moule ayant la forme de l'article désiré.

Les exemples non limitatifs suivants montrent comment la présente invention peut être mise en œuvre pratiquement.

Dans ces exemples, un certain nombre de contrôles des constituants primaires et des compositions selon l'invention sont effectués. On indique ci-après les modes opératoires ou les normes selon lesquels ces contrôles sont effectués.

Transition vitreuse:

La température de transition vitreuse correspond à la chute brutale du module de cisaillement en fonction de la température. Elle peut être déterminée sur le graphique représentant les variations du module de torsion en fonction de la température, variations mesurées par analyse thermomécanique au pendule de torsion automatique.

Module en torsion:

Il est déterminé à quatre températures: 23°C,

0 °C, −20 °C et −30 °C au pendule automatique de torsion sous une fréquence de l'ordre de 1 Hertz selon la norme ISO R 537. Les éprouvettes sont conditionnées à EHO, c'est à dire qu'elles sont placées en dessicateur sur silicagel et séchées 24 h à température ambiante sous 0,66 à $1,33 \cdot 10^2$ Pa avant de réaliser les mesures. Les résultats sont exprimés en MPa.

Détermination de la viscosité inhérente:

Le polymère séché est mis en solution à 0,5% dans le métacrésol. On mesure le temps d'écoulement de cette solution par rapport à celui du solvant pur. La valeur de la viscosité inhérente est donnée par la formule:

$\eta$ inh. = 4,6 (Log. $t_1$ − Log. $t_0$)
$t_1$ = temps d'écoulement de la solution
$t_0$ = temps d'écoulement du solvant
Elle est exprimée en dl/g

Points de fusion:

Les points de fusion (°C) ont été déterminés par microcalorimétrie différentielle (10 °C/min sous azote).

Détermination des groupements terminaux:

$NH_2$: Dosage potentiométrique automatique de la solution de polymère dans le mélange phénol-eau 90/10 en poids par HCl. Le résultat est donné en milliéquivalents gramme pour $10^3$ g de polymère.

COOH: Dissolution à chaud sous atmosphère d'azote du polymère dans l'alcool benzylique et dosage acidimétrique sous azote de cette solution chaude par une solution glycolique de potasse en présence de phénolphtaléine. Le résultat est donné en milliéquivalent gramme pour $10^3$ g de polymère.

Viscosité en milieu fondu:

Cette détermination est opérée à l'aide d'un rhéomètre «Davenport» ou d'un rhéomètre «Instron» capillaire.

Module en flexion à EHO et à 23 °C:

Cette détermination est faite sur des éprouvettes de types barreau de 100 × 10 × 4 mm selon la norme NFT 51 001. Les résultats sont exprimés en MPa.

Résistance au choc CHARPY à EHO:

Elle est déterminée à deux températures 23 °C et −30 °C sur des éprouvettes de type barreau de 60 × 10 × 4 mm comportant (choc entaillé) ou non (choc lisse) des entailles en U selon la norme NFT 51 035. Les résultats sont exprimés en kJ/m².

Indice de viscosité:

Cette détermination est opérée selon la norme ISO-307-1977.

Dureté SHORE D à EHO et à 23 °C:

Cette détermination est opérée selon la norme NFT 51 109.

Exemple 1

Préparation d'un élastomère éthylène-propylène-hexadiène-1,4 greffé anhydride maléique.

10 kg d'un élastomère éthylène-propylène-hexadiène-1,4 commercialisé par Du Pont de Nemours sous la marque déposée NORDEL 2744® [présentant une température de transition vitreuse de −50 °C, un module de torsion à 23 °C de 3 MPa, des viscosités apparentes à 250 °C de 23 000 poises et de 6000 poises (600 Pa·s) respectivement pour des gradients de vitesse de 100 $s^{-1}$ et 1000 $s^{-1}$] sont broyés et mélangés à l'état solide avec 50 g d'anhydride maléique en poudre.

On alimente avec le mélange précédent la trémie d'une extrudeuse monovis de laboratoire Thoret ayant un diamètre de vis D de 20 mm et une longueur de 20 D et on extrude le mélange dans les conditions suivantes:

- température des zones de chauffage et de la tête: 300 °C,
- pression en tête d'extrudeuse réglée par un dispositif à diaphragme: 20 MPa,
- temps de séjour moyen: environ 4 min.

Le produit extrudé est granulé et l'anhydride maléique libre est éliminé par un traitement de dévolatilisation en étuve à 120 °C sous une pression de $2,66 \cdot 100^2$ Pa pendant 2 h.

L'élastomère obtenu présente, après hydrolyse des fonctions anhydrides, une acidité exprimée en nombre de groupements acide carboxylique par gramme d'élastomère de $0,07 \cdot 10^{-3}$.

Exemple 2

Préparation d'un copolyamide semi-rigide à partir de dimère d'acide gras, d'hexaméthylène-diamine et de caprolactame.

1) Préparation du sel de l'hexaméthylène diamine et de l'acide dimère en solution à 35% en poids dans le mélange eau/caprolactame 65/35 en poids:

Dans un réacteur de 150 l, pouvant travailler sous atmosphère d'azote, muni d'un agitateur hélice (trois pales; vitesse de rotation 300 t/min) et d'un doseur permettant l'introduction d'un liquide, sont chargés:

- eau permutée: 31 690 g
- caprolactame: 17 063 g
- hexaméthylènediamine pure: 4455 g

Le mélange est homogénéisé durant environ une heure et le volume libre du réacteur est purgé par de l'azote. On introduit dans la solution agitée, par coulée régulière, en une heure environ, 21 834 g d'un lot de dimère d'acide gras commercialisé par Unilever Emery sous la marque déposée Empol 1010 ayant un taux de monomère non décelable par chromatographie des esters méthyliques. La masse est homogénéisée durant une heure.

Pour contrôler la stoechiométrie du sel obtenu, on effectue un petit prélèvement que l'on dilue par un mélange eau/caprolactame (77,6/22,4 en poids) de façon à amener la concentration du sel à 10% en poids. La valeur du pH à 20 °C de la solution diluée atteint à plus ou moins cinq centièmes d'unité pH, celle du pH au point d'équivalence.

La solution concentrée du sel est conservée sous atmosphère d'azote à 25 °C.

2) Préparation du copolyamide:

L'appareillage utilisé est constitué par:

- un réacteur de 200 l muni d'un système de chauffage par fluide caloporteur, d'un agitateur (hélice trois pales; vitesse de rotation 300 t/min), d'une colonne à distiller et d'un système permettant des purges à l'azote, relié par une canalisation calorifugée à:
- un autoclave de 100 l muni d'un système de chauffage par fluide caloporteur, d'un agitateur type cadre tournant à 16 t/min, d'un circuit pour condenser et recueillir les produits volatils permettant également une mise sous vide par éjecteurs à vapeur et d'un système permettant des purges à l'azote.

Dans le réacteur de 200 l préchauffé à 50 °C, on introduit 42820 g de la solution du sel à 35% préparée précédemment. On laisse homogénéiser durant 15 min et on introduit 50000 g d'une solution aqueuse de caprolactame à 60% en poids. Après 15 min d'homogénéisation, on introduit 875 g d'acide dimère Empol 1010® (limiteur de chaînes) et 30 $cm^3$ d'une solution d'agent antimousse à 6% dans le tétrachloréthylène. On effectue trois purges à l'azote par mise sous pression de $3 \cdot 10^5$ Pa puis décompression. La température de la masse en agitation est élevée progressivement en une heure jusqu'à environ 116 °C tout en assurant une distillation régulière par la colonne. On maintient la température de la masse vers 116 °C jusqu'à ce que le poids du distillat atteigne 31900 g.

L'agitation est alors arrêtée, on met une pression de $2 \cdot 10^5$ Pa d'azote et on vidange la masse du réacteur dans l'autoclave de 100 l préchauffé à 150 °C et purgé à l'azote.

La température de la masse agitée dans l'autoclave est élevée progressivement jusqu'à 270 °C en deux heures tout en assurant une distillation régulière.

La masse est maintenue 30 min environ sous agitation à 270 °C. On établit ensuite en 30 min environ, progressivement, une pression de $93,1 \cdot 10^2$ Pa tout en maintenant la masse en homogénéisation à 260–270 °C. La masse est agitée durant 15 min à 260–270 °C sous une pression de $93,1 \cdot 10^2$ Pa, puis on arrête l'agitation, ensuite on établit dans l'autoclave une pression d'azote de $5 \cdot 10^5$ Pa et on soutire le polymère. Ce dernier extrudé de l'autoclave sous forme de jonc est refroidi par passage dans un bain d'eau froide, puis il est granulé et séché.

Le polymère obtenu est transparent, légèrement opalescent et présente les caractéristiques suivantes:

- viscosité inhérente dans le métacrésol: 1,01 dl/g
- point de fusion: 200 °C
- groupements terminaux $NH_2$ (m éq/kg): 8,1
- groupements terminaux COOH (m éq/kg): 70,0
- taux de caprolactame résiduaire: 3%
- viscosité milieu fondu à 230 °C ($\gamma$ = $10 s^{-1}$): 5100 poises (510 Pa·s)

Les caractéristiques mécaniques mesurées sur éprouvettes moulées par injection sont indiquées dans le tableau 1.

Exemple 3

Préparation d'un copolyamide semi-rigide à partir de dimère d'acide gras, d'acide adipique et d'hexaméthylènediamine.

1) Préparation du sel de l'hexaméthylènediamine et de l'acide dimère en émulsion dans une solution aqueuse d'adipate d'hexaméthylènediamine:

Dans un réacteur de 150 l, pouvant travailler sous atmosphère d'azote, muni d'un agitateur hélice (trois pales; vitesse de rotation 300 t/min) et d'un doseur permettant l'introduction d'un liquide, sont charges:

- eau permutée: 23000 g
- adipate d'hexaméthylènediamine (sel N) cristallisé: 16692 g

Le mélange est agité à 25 °C jusqu'à dissolution complète du sel N. On introduit 5512 g d'une solution aqueuse d'hexaméthylènediamine à 30,8% en poids et on homogénéise à 25 °C pendant 10 min.

On introduit ensuite lentement sous agitation, en une heure environ, 8434 g de dimère d'acide gras Empol 1010 d'Unilever Emery ayant un taux de monomère non décelable par chromatographie des esters méthyliques.

L'émulsion obtenue est agitée pendant deux heures.

Pour contrôler la stoechiométrie du sel obtenu, on prélève 20 g d'émulsion que l'on dilue par 17,8 g d'un mélange eau/isopropanol (21,9/78,1 en poids) de façon à amener la concentration de sel de l'acide dimère à 10% en poids. La valeur du pH à 20 °C de la solution diluée est de 8,47 et correspond à plus ou moins 0,1 unité pH près à la valeur du pH au point d'équivalence.

2) Préparation du copolyamide:

L'appareillage utilisé est du même type que celui utilisé pour la préparation du copolyamide de l'exemple 2 mais avec un réacteur d'une capacité de 100 l et un autoclave d'une capacité de 50 l.

Dans le réacteur de 100 l préchauffé à 50 °C, on introduit 40230 g de l'émulsion de sel précédente et 30 $cm^3$ d'une solution d'agent antimousse à 6% en poids dans le tétrachloréthylène. On effectue trois purges à l'azote par mise sous pression de $3 \cdot 10^2$ Pa puis décompression. La température de la masse en agitation est élevée progressivement en 1,5 h de façon à séparer régulièrement 9300 g de distillat.

Le réacteur est mis sous une pression de $2 \cdot 10^5$ Pa d'azote et on transfert rapidement la masse du réacteur dans l'autoclave de 50 l purgé à l'azote et préchauffé à 250 °C. Le chauffage de l'autoclave est réglé de façon à obtenir une pression autogène de $18 \cdot 10^5$ Pa, puis on distille sous $18 \cdot 10^5$ Pa en une heure de l'eau de façon à atteindre une température masse de 280 °C. L'agitation étant mise en route lorsque la température masse atteint 250 °C.

On arrête ensuite la distillation pour effectuer une phase d'homogénéisation de 2,5 h à 280°C sous une pression de $18 \cdot 10^5$ Pa.

On décomprime ensuite jsuqu'à pression atmosphérique en 30 min en maintenant la température à 275–280°C, puis on maintient la masse sous agitation à pression atmosphérique à 275–280°C durant 30 min.

On arrête alors l'agitation, on établit dans l'autoclave une pression d'azote de $5 \cdot 10^5$ Pa et on soutire le polymère. Ce dernier, extrudé de l'autoclave sous forme de jonc est refroidi par passage dans un bain d'eau froide, puis il est granulé et séché.

Le polymère obtenu est translucide et présente les caractéristiques suivantes:

- viscosité inhérente dans le métacrésol: 0,93 dl/g
- point de fusion: 246°C
- groupements terminaux $NH_2$ (m éq/kg): 44,1
- groupements terminaux COOH (m éq/kg): 74,4
- viscosité en milieu fondu à 260°C ($\gamma = 10\ s^{-1}$): 2250 poises (225 Pa·s)

Les caractéristiques mécaniques mesurées sur éprouvettes moulées par injection sont indiquées dans le tableau 1.

Exemple 4

Préparation d'une composition suivant l'invention à partir du copolyamide semi-rigide de l'exemple 2 et de l'élastomère de l'exemple 1.

On réalise un mélange de 80 parties en poids de granulés du copolyamide de l'exemple 2 et de 20 parties en poids de l'élastomère fonctionnalisé de l'exemple 1. Ce mélange de granulés est séché durant 15 h à 50°C sous une pression de $1,33 \cdot 10^2$ Pa.

Le mélange de granulés secs est extrudé sur une extrudeuse Werner-Pfleiderer type ZSK 30 à double vis co-rotatives et équipée de 5 zones de malaxage dans les conditions opératoires suivantes:

- températures: 240–245°C
- vitesse de vis: 200 t/min
- débit: 9,6 kg/h

Le produit extrudé est recueilli sous forme de joncs, refroidis par passage dans un bain d'eau froide, puis il est granulé et séché.

Les caractéristiques mesurées sur éprouvettes moulées par injection sont indiquées dans le tableau 1. Les éprouvettes moulées présentent un remarquable état de surface et une grande souplesse à basse température associés à une résistance mécanique élevée.

Exemple 5

Préparation d'une composition suivant l'invention à partir du copolyamide semi-rigide de l'exemple 3 et de l'élastomère de l'exemple 1.

On répète les opérations de l'exemple 4 en remplaçant le copolyamide de l'exemple 2 par celui de l'exemple 3 et en opérant l'extrusion du mélange de granulés dans les conditions suivantes:

- températures: 260–265°C
- vitesse de vis: 200 t/min
- débit: 15,6 kg/h

Les éprouvettes moulées par injection à partir du composite obtenu présentent un bel aspect de surface, et une bonne souplesse à de basses températures associés à une résistance mécanique élevée. Les caractéristiques mesurées sur éprouvettes moulées sont indiquées dans le tableau 1.

Tableau 1

| Exemple | Phase élastomérique | | | Caractéristiques mécaniques à EHO | | | | | | | | |
|---|---|---|---|---|---|---|---|---|---|---|---|---|
| | Nature | Teneur % | Tailles des particules en µm | Module en flexion en MPa | Module en torsion en MPa | | | | Résistance au choc Charpy kJ/m² | | | |
| | | | | | | | | | entaillé | | lisse | |
| | | | | 23°C | 23°C | 0°C | -20°C | -30°C | 23°C | -30°C | 23°C | -30°C |
| 2 (témoin) | | | | 860 | 420 | 580 | 635 | 660 | 23,6 | 3,6 | NR* | 23,7 |
| 4 (composition) | exemple 2 | 20 | 0,1-1,5 | 460 | 300 | 480 | 515 | 540 | 50 | 20 | NR | NR |
| 3 (témoin) | | | | 1100 | 500 | 550 | 610 | 650 | 16,5 | 2,4 | NR | 35 |
| 5 (composition) | exemple 3 | 20 | 0,1-1,5 | 820 | 400 | 480 | 530 | 560 | 41,3 | 21,5 | NR | NR |

(*) NR signifie: non rompu

Exemple 6

Préparation d'un élastomère du type copolyesteramide.

On prépare un polyétheresteramide du type de celui décrit dans l'exemple 5 de FR-A 2 471 394.

1) Préparation du prépolyétherester par

condensation d'acide dimère Empol 1010 et de polytétrahydrofuranne de poids moléculaire 1000 (Poly THF PM 1000):

Dans un autoclave en acier inoxydable de 7,5 l on introduit les réactifs suivants:

- acide dimère Empol 1010® d'Unilever Emery: 2882,5 g
- poly THF PM 1000 de marque commerciale déposée TERACOL 1000®: 2312,5 g

On purge soigneusement sous azote, agite et amène la température de la masse à 250 °C en h. On établit ensuite le vide en une heure jusqu'à atteindre $0,66 \cdot 10^2$ Pa. La masse est maintenue 2 h à 250 °C sous $0,66 \cdot 10^2$ Pa. La masse est mise ensuite sous atmosphère d'azote, puis refroidie à 120 °C et soutirée sous la forme d'un prépolymère liquide incolore.

Le dosage des groupements acides carboxyliques sur le prépolyétherester indique: 0,101 COOH/100 g.

2) Préparation du prépolyamide par condensation d'acide dimère Empol 1010 d'acide sébacique et d'hexaméthylène diamine:

Dans un autoclave en acier inoxydable de 7,5 l on introduit les réactifs suivants:

- acide dimère Empol 1010® d'Unilever Emery: 1596,2 g
- acide sébacique: 1305 g
- hexaméthylènediamine pure cristallisée: 867 g

On purge soigneusement sous azote et porte sous agitation la température de la masse à 275 °C en 2 h. On maintient la masse à 275 °C en agitation durant une heure puis on soutire le prépolymère dans l'eau. Le prépolyamide est essoré, broyé et séché à 100 °C en étuve sous vide. Ses caractéristiques sont les suivantes:

- groupements terminaux COOH: 866,5 m éq/kg
- groupements terminaux $NH_2$: 4,1 m éq/kg

3) Préparation de l'élastomère polyétheresteramide:

Dans un autoclave en acier inoxydable de 7,5 l on introduit les charges suivantes:

- prépolyétherester obtenu précédemment: 2500 g
- prépolyamide obtenu précédemment: 971 g
- éthylène glycol: 228 g

catalyseur à base de titanate de triéthanolamine: 2,1 g

L'appareil est purgé soigneusement à l'azote, la température est élevée à 260 °C en deux heures puis maintenue à cette valeur durant une heure. On établit ensuite en 75 min le vide jusqu'à atteindre $0,19 \cdot 10^2$ Pa. On polycondense à 260 °C sous $0,19 \cdot 10^2$ Pa durant 105 min. On établit alors une pression de $5 \cdot 10^5$ Pa d'azote et on soutire le polymère qui est refroidi à l'eau puis granulé après passage dans un mélange acétone/carboglace et séché.

Les caractéristiques de l'élastomère obtenu sont les suivantes:

- viscosité inhérente dans le m-crésol: 1,08 dl/g
- caractéristiques thermomécaniques en torsion au pendule automatique à EHO:
- transition vitreuse T: −74 °C
- module de torsion à 23 °C: 13 MPa à −30 °C: 24 MPa
- viscosité en milieu fondu:
  à 230 °C ($\gamma = 10\ s^{-1}$): 4670 poises (467 Pa·s)
  à 260 °C ($\gamma = 10\ s^{-1}$): 1250 poises (125 Pa·s)

Exemple 7

Préparation d'une composition suivant l'invention à partir du copolyamide semi-rigide de l'exemple 2 et de l'élastomère de l'exemple 6.

Un mélange de 50 parties en poids de granulés du copolyamide de l'exemple 2 et de 50 parties en poids de granulés de l'élastomère polyétheresteramide de l'exemple 6 est séché à 50 °C sous une pression de $1,33 \cdot 10^2$ Pa durant 15 h puis extrudé sur une extrudeuse de laboratoire Thoret ayant un diamètre de vis D de 20 mm et une longueur de 20 D dans les conditions opératoires suivantes:

- températures: 230 °C
- pression en tête d'extrudeuse: 15 MPa
- vitesse de vis: 70 t/min

Le produit extrudé est recueilli sous forme de joncs, refroidi par passage dans un bain d'eau froide, puis il est granulé et séché.

Les caractéristiques mesurées sur éprouvettes moulées par injection sont indiquées dans le tableau 2.

Exemple 8

Préparation d'une composition suivant l'invention à partir du copolyamide semi-rigide de l'exemple 2 et de l'élastomère de l'exemple 6.

Un mélange de 60 parties en poids de granulés du copolyamide de l'exemple 2 et de 40 parties en poids de granulés de la composition obtenue à l'exemple 7 (mélange 50/50 en poids du copolyamide de l'exemple 2 et de l'élastomère de l'exemple 6 qui joue alors de rôle de mélange-maître) est séché à 80 °C sous pression de $1,33 \cdot 10^2$ Pa durant 15 h et extrudé sur une boudineuse de laboratoire Thoret (∅20-20D) dans les conditions opératoires suivantes:

- températures: 230 °C
- pression en tête d'extrudeuse: 12 MPa
- vitesse de vis: 70 t/min

Le produit recueilli comme dans l'exemple 7 présente sur éprouvettes moulées par injection les caractéristiques indiquées dans le tableau 2.

Tableau 2

| Exemple | Phase élastomérique | | | Caractéristiques mécaniques à EHO | | | | |
|---|---|---|---|---|---|---|---|---|
| | Nature | Teneur % en poids | Tailles des particules en µm | Module en flexion en MPa | Module en torsion en MPa | | | |
| | | | | 23 °C | 23 °C | 0 °C | -20 °C | -30 °C |
| 2 (témoin) | | 0 | | 860 | 420 | 580 | 635 | 660 |
| 7 | exemple 6 | 50 | 0,1-0,6 | 160 | 70 | 85 | 105 | 130 |
| 8 | exemple 6 | 50 | 0,05-0,4 | 510 | 280 | 400 | 450 | 465 |

Exemple 9

Préparation d'une composition suivant l'invention à partir du copolyamide semi-rigide de l'exemple 2 et d'un élastomère du type (2g):

Un copolymère de butadiène et de méthacrylate de méthyle à structure «cœur-peau» est obtenu par polymérisation en émulsion en deux étapes: au cours de la première étape, on copolymérise en émulsion un mélange de butadiène-1,3 et de méthacrylate de méthyle dans la proportion pondérale de 78/22. Dans la deuxième étape, on polymérise en émulsion, sur 75 parties en poids du copolymère précédente, 25 parties en poids de méthacrylate de méthyle.

Le latex obtenu à l'issue de la deuxième étape est constitué de particules d'une taille moyenne de 0,2 µm. Il est coagulé pour permettre la séparation du copolymère qui est ensuite séché. Le copolymère obtenu présente des températures de transition vitreuse de −55 °C et +75 °C respectivement pour les phases «cœur» et «peau» et un module de torsion à 23 °C de 90 MPa.

Un mélange de 80 parties en poids de granulés du copolyamide de l'exemple 2 et de 20 parties en poids de poudre du copolymère de butadiène/méthacrylate de méthyle est séché à 80 °C sous pression de $1{,}33 \cdot 10^2$ Pa durant 15 h puis extrudé sur une extrudeuse doublevis Werner-Pfleiderer ZSK 30 à 5 zones de malaxage à une température voisine de 250 °C et avec un débit de 10 kg/h.

Le produit extrudé est recueilli sous forme de joncs, refroidi par passage dans un bain d'eau froide, granulé et séché.

Les caractéristiques mesurées sur éprouvettes moulées par injection sont les suivantes:

- module en flexion à EHO à 23 °C: 540 MPa
- module en torsion à EHO à 23 °C: 250 MPa à −20 °C: 50 MPa

Exemple 10

Préparation d'une composition suivant l'invention par introduction d'un latex de type (2g) dans le milieu de préparation du copolyamide semi-rigide de l'exemple 2.

Un copolymère préparé en émulsion à 50% en poids de concentration à partir des monomères suivants:

- butadiène: 60% en poids
- styrène: 36% en poids
- acide acrylique: 3% en poids
- acide fumarique: 1% en poids

présente les caractéristiques suivantes:

- taille des particules: 0,15 µm
- acidité exprimée en m éq COOH/kg: 475
- transition vitreuse: −31 °C
- module en torsion à EHO à 23 °C: 1,3 MPa

Le latex à 50% du copolymère est neutralisé par de la potasse en solution aqueuse à 10% de façon à amener son pH (à 20 °C) à 7,35.

Dans un petit réacteur en verre de 250 ml muni d'un agitateur de type ancre, d'une tubulure pour la distillation des produits volatils et d'un système permettant de purger la colonne de réacteur par de l'azote, sont chargés les réactifs suivants:

- solution du sel de l'hexaméthylènediamine et de l'acide dimère à 35% dans le mélange eau caprolactame 65/35 en poids préparé comme indiqué à l'exemple 2: 42,8 g
- solution aqueuse de caprolactame à 60%: 44,8 g
- latex à 50% du copolymère neutralisé: 24,7 g

La masse est homogénisée et l'on purge le volume libre du réacteur par de l'azote. La température de la masse est élevée progressivement jusqu'à 270 °C en 1,5 h tout en agitant et en assurant une distillation régulière. Le polymère est maintenu sous agitation à 270 °C durant 45 min puis refroidi.

Le polymère récupéré est broyé et lavé durant 8 h dans de l'eau à ébullition, puis essoré et séché durant 15 h à 80 °C sous vide de $1{,}33 \cdot 10^2$ Pa.

Le polymère obtenu, renfermant 20% en poids du copolymère de butadiène, est moulé par compression à 230 °C sous une pression de 40 MPa.

Les caractéristiques déterminées sur éprouvettes sont les suivantes:

- module en torsion à EHO à 20 °C: 220 MPa à 0 °C: 500 MPa

Exemple 11

Préparation d'une composition suivant l'invention à partir d'un copolyamide semi-rigide du type de celui de l'exemple 2, d'un élastomère du type de celui de l'exemple 1 et d'un polyamide conventionnel consistant en du nylon 6 en utilisant la technique d'introduction faisant appel à l'emploi d'un mélange-maître à base de nylon 6.

Le copolyamide semi-rigide mis en œuvre ici est préparé dans un autoclave de 500 l (agitation

32 t/min), conformément au schéma général décrit dans l'exemple 2. Ce polymère présente les caractéristiques suivantes:

- viscosité inhérente dans le métacrésol: 0,99 dl/g
- indice de viscosité dans l'acide formique à 95%: 111 ml/g
- groupements terminaux $NH_2$ (m éq/kg): 10,5
- groupements terminaux COOH (m éq/kg): 58,2
- viscosité milieu fondu à 230°C (γ: 10 $s^{-1}$): 5100 poises (510 Pa·s)

L'élastomère mis en œuvre ici est préparé conformément au schéma général décrit dans l'exemple 1. L'élastomère obtenu présente, après hydrolyse des fonctions anhydrides, une acidité correspondant à $0{,}075 \cdot 10^{-3}$ groupements acide carboxylique par gramme d'élastomère.

Le nylon 6 mis en œuvre ici est le produit mis dans le commerce par la Société Bayer sous la marque déposée «Durethan BK 31®», présentant un indice de viscosité de 142 ml/g dans l'acide formique à 90%.

1) Confection d'un mélange-maître à partir du nylon 6 et de l'élastomère:

On réalise un mélange à sec de 55 parties en poids de granulés du polyamide 6 avec 45 parties en poids de granulés de l'élastomère en opérant dans un mélangeur Moritz.

Ce mélange est ensuite extrudé sur une extrudeuse-dégazeuse Prodex ayant un diamètre de vis D de 65 mm et une longueur de 24 D et équipée d'une vis cylindro-conique ayant un profil adapté pour le travail des polyamides et d'une filière à deux trous de 5 mm de diamètre. Les conditions de l'extrusion sont les suivantes:

- températures: 250–300°C
- pression en bout de vis: $50 \cdot 10^5$ Pa
- vide: $994 \cdot 10^2$ Pa
- vitesse de vis: 78 t/min
- débit matière: 39,6 kg/h

Le produit recueilli sous forme de joncs est refroidi par passage dans un bain d'eau froide, puis il est granulé et séché. Ce mélange-maître présente les caractéristiques analytiques suivantes: indice de viscosité de la partie soluble dans l'acide formique à 90%: 160 ml/g; teneur en eau résiduelle: 0,12% en poids; l'observation en microscopie optique et électronique à transmission montre que l'élastomère est réparti de manière homogène dans le polyamide 6 avec une dispersion fine, les plus grosses particules ayant une taille bien inférieure à 1 mm.

2) Préparation d'une formulation témoin:

On réalise un mélange du copolyamide semi-rigide avec divers additifs facilitant la mise en œuvre et améliorant les performances d'usage du polymère sous l'action d'agents de dégradation comme l'oxygène, la chaleur et la lumière. Ces additifs et leurs proportions dans le mélange sont les suivants:

- lubrifiant et agent de démoulage (stéarate de zinc + cire ester): 0,75% en poids (par rapport à la matrice polyamide)
- nucléant (talc): 0,2% en poids
- stabilisant à l'oxidatioon et à la chaleur (phénol encombré): 0.25% en poids
- stabilisant à l'action de l'ultraviolet (benzotriazole + amine encombrée de la famille des pipéridines): 0,5% en poids

Le mélange est opéré dans un mélangeur Moritz, puis il est ensuite homogénéisé par extrusion sur l'extrudeuse-dégazeuse Prodex dont on a parlé ci-avant dans les conditions suivantes:

- températures: 210–250°C
- pression en bout de vis: $10 \cdot 10^5$ Pa
- vide: $957 \cdot 10^2$ Pa
- vitesse de vis: 66 t/min
- débit matière: 46,8 kg/h

Le mélange extrudé est recueilli sous forme de joncs qui sont refroidis par passage dans un bain d'eau froide, puis granulés et séchés. Il possède les caractéristiques analytiques suivantes: viscosité inhérente dans le métacrésol: 1 dl/g; teneur en eau résiduelle: 0,17%.

Des éprouvettes sont moulées et les caractéristiques physico-mécaniques mesurées sont indiquées dans le tableau 3.

3) Préparation d'une composition suivant l'invention à partir du copolyamide semi-rigide et du mélange-maître confectionné ci-avant:

On réalise d'abord un prémélange à sec, dans un mélangeur Moritz, de 55 parties en poids de granulés du copolyamide semi-rigide avec 45 parties en poids de granulés du mélange-maître. On ajoute ensuite à ce prémélange les additifs d'aide à la transformation et de protection utilisés lors de la préparation de la formulation témoin.

Le mélange final est extrudé sur l'extrudeuse-dégazeuse Prodex décrit ci-avant dans les conditions suivantes:

- températures: 250–310°C
- pression en bout de vis: $30 \cdot 10^5$ Pa
- vide: $957 \cdot 10^2$ Pa
- vitesse de vis: 40 t/min
- débit matière: 32,7 kg/h

Le produit extrudé, recueilli sous forme de joncs, est refroidi sous eau froide, puis granulé et séché. Il possède les caractéristiques analytiques suivantes: indice de viscosité de la partie soluble dans l'acide formique à 95%: 146 ml/g; teneur en eau résiduelle: 0,075%; viscosité en milieu fondu à 240°C (γ = 10 $s^{-1}$): 40000 poises (4000 Pa·s); l'observation en microscopie électronique à transmission montre que l'élastomère est réparti de manière homogène dans le mélange des deux polyamides avec une dispersion fine, les plus grosses particules ayant une taille inférieure à 1 µm.

Les caractéristiques physico-mécaniques mesurées sur éprouvettes moulées par injection sont indiquées dans le tableau 3.

Tableau 3

| Exemple | Composition | | Températures de mesure en °C | Caractéristiques mécaniques à EHO | | | |
|---|---|---|---|---|---|---|---|
| | Matrice de polyamide(s) | Teneur en phase élastomérique % en poids | | Module en flexion en MPA | Résistance au choc Charpy en kJ/$m^2$ | | Dureté Shore D |
| | | | | | entaillé | lisse | |
| 11 (témoin) | Copolyamide semi-rigide 100% | 0 | 23 | 650 | 10 | NR** | 71 |
| | | | -20 | 2280 | 2,5 | 55% de NR | |
| 11 (Composition selon l'invention) | Copolyamide semi-rigide (69%) nylon 6 (31%) | 20,25 | 23 | 900 | 47,6* (50%) | NR | 71 |
| | | | -25 | 1495 | 12,1 | NR | |
| | | | -40 | | 6,8 | NR | |

(*) L'éprouvette se déchire partiellement sans se rompre. La valeur indiquée ne répresente donc pas une résilience proprement dite mais, à titre indicatif, une résistance en fléchissement. Entre paranthèses, on a noté la valeur en % de la déchirure par rapport à la hauteur sous entaille du barreau.
(**) NR signifie: non rompu

Exemple 12

Préparation d'une composition suivant l'invention à partir du copolyamide semi-rigide et de l'élastomère mis en œuvre dans l'exemple 11, en utilisant la technique d'introduction faisant appel à l'emploi d'un mélange-maître à base du copolyamide semi-rigide précité.

1) Confection du mélange-maître à partir du copolyamide et de l'élastomère:

On réalise un mélange à sec de 55 parties en poids de granulés du copolyamide avec 45 parties en poids de granulés de l'élastomère en opérant dans un mélangeur Moritz.

Ce mélange est ensuite extrudé sur l'appareil Prodex décrit ci-avant dans l'exemple 11 dans les conditions suivantes:

- températures: 225–265 °C
- pression en bout de vis: 25 · $10^5$ Pa
- vide: 957 · $10^2$ Pa
- vitesse de vis: 51 t/min
- débit matière: 33 kg/h

Le produit extrudé, recueilli sous forme de joncs, est refroidi sous eau froide, puis il est granulé et séché.

2) Préparation d'une composition selon l'invention à partir du copolyamide semi-rigide et du mélange-maître confectionné ci-avant:

On réalise d'abord un prémélange à sec, dans un mélangeur Moritz, de 55 parties en poids de granulés du copolyamide semi-rigide avec 45 parties en poids de granulés du mélange-maître. On ajoute ensuite à ce prémélange les mêmes additifs d'aide à la transformation et de protection que ceux mis en œuvre dans les étapes 2) et 3) décrites dans l'exemple 11 précité (les productions de ces additifs sont également les mêmes et sont celles indiquées dans l'étape 2) de l'exemple 11).

Le mélange final est extrudé sur l'extrudeuse Prodex dans les conditions suivantes:

- températures: 225–226 °C
- pression en bout de vis: 10 · $10^5$ Pa
- vide: 957 · $10^2$ Pa
- vitesse de vis: 50 t/min
- débit matière: 30,6 kg/h

Le produit extrudé, recueilli sous forme de joncs, est refroidi sous eau froide, puis il est granulé et séché. Il possède les caractéristiques analytiques suivantes: indice de viscosité de la partie soluble dans l'acide formique à 95%: 112 ml/g; teneur en eau résiduelle: 0,09%. Les caractéristiques mécaniques mesurées sur éprouvettes moulées par injection sont indiquées dans le tableau 4.

3) Formulation témoin:

Cf. ci-avant l'étape 2) décrite dans l'exemple 11.

Exemple 13

Préparation d'une composition suivant l'invention à partir du copolyamide semi-rigide et de l'élastomère mis en œuvre dans l'exemple 11, en utilisant la technique d'introduction directe décrite dans l'exemple 4 mais en opérant cette fois le mélange des ingrédients sur une extrudeuse monovis au lieu d'une extrudeuse double-vis.

On réalise un mélange à sec de 80 parties en poids de granulés du copolyamide semi-rigide avec 20 parties en poids de granulés de l'élastomère en opérant dans un mélangeur Moritz. On ajoute ensuite à ce prémélange, dans les mêmes proportions, les mêmes additifs d'aide à la transformation et de protection que ceux utilisés pour la préparation des formulations décrites dans les exemples 11 et 12 et le mélange final est extrudé sur l'extrudeuse monovis Prodex utilisée ci-avant dans les exemples 11 et 12; les conditions de marche de l'extrudeuse sont les suivantes:

- températures: 225–265 °C
- pressions en bout de vis: 25 · $10^5$ Pa
- vide: 957 · $10^2$ Pa

- vitesse de vis: 47 t/min
- débit matière: 26,7 kg/h

Le produit extrudé, recueilli sous forme de joncs, est refroidi sous eau froide, puis il est granulé et séché. Il possède les caractéristiques analytiques suivantes: indice de viscosité de la partie soluble dans l'acide formique à 95%: 114 ml/g; teneur en eau résiduelle: 0,09%. Les caractéristiques mécaniques mesurées sur éprouvettes moulées par injection sont indiquées dans le tableau 4 suivant.

Tableau 4

| Exemple | Composition | | | Températures de mesure en °C | Caractéristiques mécaniques à EHO | | |
|---|---|---|---|---|---|---|---|
| | Matrice de polyamide(s) | Teneur en phase élastomérique % en poids | Technique d'introduction de l'élastomère | | Résistance au choc Charpy en kJ/m² | | Dureté Shore D |
| | | | | | entaillé | lisse | |
| Témoin (exemple 11 témoin) | Copolyamide semi-rigide 100% | 0 | – | 23 | 10 | NR(**) | 71 |
| | | | | −20 | 2,5 | 55% de NR | |
| 12 | Copolyamide semi-rigide 100% | 20,25 | Mélange-maître dans copolyamide semi-rigide | 23 | 51,5*(28%) | NR | 68 |
| | | | | −25 | 12,4 | NR | |
| 13 | Copolyamide semi-rigide 100% | 20 | Mélange direct | 23 | 14,9 | NR | 60 |
| | | | | −25 | 8,5 | NR | |

(*) et (**): cf. ci-avant au bas du tableau 3

**Revendications**

1. Compositions pour moulage à base de polyamide ayant d'excellentes propriétés de souplesse et de résilience notamment à des températures aussi basses que celles allant de 0°C à −40°C, caractérisées en ce qu'elles comprennent à titre de constituants obligatoires:

(1) un copolymère semi-rigide préparé:
- soit à partir de dimère d'acide gras, d'hexaméthylènediamine et de caprolactame en mettant en œuvre un mélange comprenant 5 à 60% en poids d'un sel de dimère d'acide gras et d'hexaméthylènediamine et 95 à 40% en poids de caprolactame, ledit sel étant sous forme d'une solution dans un solvant particulier à base d'un mélange eau-alcool ayant moins de 5 atomes de carbone, d'un mélange eau-caprolactame ou de caprolactame lui-même, la stœchiomètrie dudit sel étant contrôlée rigoureusement par une mesure de pH;
- soit à partir de dimère d'acide gras, d'acide adipique et d'hexaméthylènediamine en veillant à ce que le rapport molaire en acide adipique par rapport aux acides totaux soit compris entre 0,5 et 0,99 et en mettant en œuvre une série d'opérations dans des conditions de température et de pression qui sont choisies de manière à obtenir des copolymères homogènes ne présentant qu'une seule phase à l'état fondu ou à l'état solide;

(2) et au moins un élastomère comportant des séquences compatibles ou réactives avec le copolyamide (1) appartenant au groupe constitué par:
(a) des copolymères oléfiniques dérivant d'une α-oléfine aliphatique comportant de 2 à 6 atomes de carbone et d'au moins un composé appartenant à la classe des mono- ou diacides carboxyliques α, β-insaturés comportant de 3 à 8 atomes de carbone, les esters d'alkyles inférieurs et les anhydrides dérivés de ces acides;
(b) des copolymères oléfiniques contenant des groupes carboxyles et/ou carboxylates et dérivant d'éthylène et d'au moins une α-oléfine ayant de 3 à 6 atomes de carbone;
(c) des copolymères oléfiniques contenant des groupes carboxyles et/ou carboxylates et dérivant d'éthylène, d'au moins une α-oléfine ayant de 3 à 6 atomes de carbone et d'au moins un diène aliphatique non conjugué comportant au moins 6 atomes de carbone;
(d) des copolyesteramides obtenus à partir (i) d'un composé acide comprenant 1 à 100% en mole d'un diacide ou dérivé ayant de 15 à 60 atomes de carbone et 0 à 99% en mole d'au moins un autre réactif difonctionnel choisi parmi des diacides, des aminoacides, des hydroxyacides et leurs dérivés formateurs d'esters ou d'amides, ces composés ayant un nombre d'atomes de carbone ou plus égal à 12, (ii) d'un composé dihydroxylé pouvant être un diol linéaire, ramifié ou cyclique ayant de 2 à 8 atomes de carbone et/ou un composé dihydroxylé macromoléculaire ayant un poids moléculaire compris entre 500 et 5000 comme les polyoxyéthylèneglycols, les polytétrahydrofurannes, les polyoxypropylèneglycols et (iii) un composé aminé comprenant au moins une diamine et/ou au moins un aminoalcool ayant un nombre d'atomes de carbone au plus égal à 25, le composé (iii) pouvant être omis dans le cas où le

composé acide (i) renferme déjà un réactif aminé;

(e) des polyuréthanes obtenus à partir (i) d'un polyester aliphatique et/ou d'un polyéther aliphatique à terminaison hydroxyle ayant un poids moléculaire compris entre 500 et 4000, (ii) d'un diol aliphatique comportant 2 à 8 atomes de carbone et éventuellement un substituant de type nitro-, chloro-, bromo- ou fluoro- et (iii) d'un diisocyanate aromatique;

(f) des copolymères séquencés organopolysiloxaniques et polyuréthanes obtenus par réaction entre (i) un macrodiolpolysiloxanique (ou un macrodiisocyanate polysiloxanique) issu de la réaction entre un α, ω-hydrogénopolysiloxane de formule:

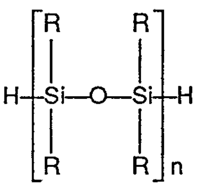

dans laquelle n est un nombre compris entre 10 et 80 et les substituants R, identiques ou différents, représentent des groupes méthyles, vinyles ou phényles, et un monoalcool primaire éthylénique (ou un monoisocyanate éthylénique) et (ii) un diol court et un diisocyanate court;

(g) des copolymères de monomères insaturés, présentant au moins une phase élastomérique, obtenus sous formes de particules de dimensions comprises entre 0,05 et 1,5 µm par polymérisation en émulsion à partir d'un acrylate d'alkyle, d'un méthacrylate d'alkyle ou d'un diène aliphatique conjugué, d'au moins un co-monomère insaturé porteur d'une fonction acide carboxylique ou dérivée, amine ou dérivée, nitrile, acide sulfonique ou dérivée et éventuellement d'au moins un autre co-monomère à insaturation éthylènique;

la quantité de phase élastomérique (2), qui peut comprendre un ou plusieurs élastomères représentant 4% à 60% du poids de l'ensemble copolyamide semi-rigide (1) + phase élastomérique (2).

2. Compositions selon la revendication 1, caractérisées en ce que les acides dimères mis en œuvre sont obtenus par polymérisation de mélanges comprenant une quantité majoritaire d'acides gras monomères ayant de 16 à 20 atomes de carbones et une quantité minoritaire d'acides gras monomères ayant de 8 à 15 et/ou de 21 à 24 atomes de carbone lesdits acides dimères contenant une fraction en dimère qui est supérieure à 95% en poids, une fraction en monomère qui est inférieure à 0,5% en poids.

3. Compositions selon l'une quelconque des revendications 1 et 2, caractérisées en ce qu'elles comprennent en outre, à côté du copolyamide semi-rigide (1) et de la phase élastomérique (2), un polyamide conventionnel (3), la quantité de phase élastomérique (2) représentant alors 4% à 60% du poids de l'ensemble copolyamide semi-rigide (1) + phase élastomérique (2) + polyamide conventionnel (3), et la quantité de polyamide conventionnel (3) représentant au plus 50% du poids de l'ensemble copolyamide (1) + polyamide conventionnel (3).

4. Compositions selon la revendication 3, caractérisées en ce que le polyamide conventionnel (3) est un polyamide obtenu par polycondensation de diacides autres que des dimères d'acides gras et de diamines, par homopolycondensation d'amino-acides ou par polymérisation de lactames.

5. Procédé de préparation des compositions selon l'une quelconque des revendications 1 à 4, caractérisées en ce que l'on réalise le mélange direct des divers ingrédients sous forme de poudre ou granulés en opérant d'abord à froid un malaxage dans un mélangeur classique, puis en homogénéisant ensuite l'ensemble en opérant à chaud dans un dispositif capable de développer des forces de cisaillement adéquates.

6. Procédé de préparation des compositions selon l'une quelconque des revendications 1 et 2, caractérisées en ce que l'on réalise un mélange-maître sous forme de granulés à base d'une partie du copolyamide semi-rigide (1) et du (ou des) élastomère(s) (2), ce mélange-maître étant ensuite mélangé avec des granulés du reste du copolyamide (1) à modifier.

7. Procédé de préparation des compositions selon l'une quelconque des revendications 3 et 4, caractérisées en ce que l'on réalise un mélange-maître sous forme de granulés à base du polyamide conventionnel (3) et du (ou des) élastomère(s) (2), ce mélange-maître étant ensuite mélange avec des granulés du copolyamide semi-rigide (1).

8. Procédé de préparation selon la revendication 7, caractérisé en ce que le polyamide conventionnel (3) qui est utilisé pour confectionner le mélange-maître est un polyaminoacide issu de l'homopolycondensation d'aminoacides ou de la polymérisation de lactames.

9. A titre de moyen destiné à la mise en œuvre du procédé selon la revendication 6 ou 7, un mélange-maître obtenu par dispersion de 30 à 70% en poids, par rapport au poids du mélange-maître, du (ou des) élastomère(s) (2) dans 70 à 30% en poids de copolyamide semi-rigides (1) ou de polyamide conventionnel (3).

10. Moyen selon la revendication 9, caractérisé en ce que, lorsque l'on fait appel à un polyamide conventionnel (3), on utilise un polyaminoacide issu de l'homopolycondensation d'aminoacides ou de la polymérisation de lactames.

11. Objets moulés obtenus à partir des compositions selon l'une quelconque des revendications 1 à 4.

**Patentansprüche**

1. Formmassen auf Polyamidbasis mit ausgezeichneten Geschmeidigkeits- und Elastizitätseigenschaften, insbesondere bei so niedrigen Temperaturen wie 0°C bis −40°C, dadurch gekennzeichnet, dass sie als obligate Bestandteile enthalten:

(1) ein halbstarres Copolyamid, hergestellt:

- entweder aus Fettsäuredimerem, Hexamethylendiamin und Caprolactam, indem ein Gemisch von 5 bis 60 Gew.-% eines Salzes von Fettsäuredimerem und Hexamethylendiamin und 95 bis 40 Gew.-% Caprolactam eingesetzt werden, wobei dieses Salz in Form einer Lösung in einem besonderen Lösungsmittel auf Basis eines Gemisches von Wasser-Alkohol mit weniger als 5 Kohlenstoffatomen, eines Gemisches Wasser-Caprolactam oder Caprolactam selbst vorliegt, wobei die Stöchiometrie dieses Salzes durch pH-Messung genau kontrolliert wird;

- oder ausgehend von Fettsäuredimerem, Adipinsäure und Hexamethylendiamin, wobei beachtet wird, dass das Molverhältnis Adipinsäure in bezug auf die Gesamtsäuren zwischen 0,5 und 0,99 liegt und eine Reihe von Arbeitsgängen unter Temperatur- und Druckbedingungen durchgeführt werden, die derart ausgewählt sind, dass homogene Copolymere erhalten werden, die nur eine einzige Phase in geschmolzenem Zustand oder in festem Zustand aufweisen;

(2) und wenigstens ein Elastomeres, das mit dem Copolyamid (1) verträgliche oder reaktive Sequenzen aufweist, die zur Gruppe gehören, bestehend aus:

(a) Olefincopolymeren, abgeleitet von einem aliphatischen α-Olefin mit 2 bis 6 Kohlenstoffatomen und von wenigstens einer Verbindung, die zur Klasse der α,β-ungesättigten Mono- oder Dicarbonsäuren mit 3 bis 8 Kohlenstoffatomen, der von diesen Säuren abgeleiteten niederen Alkylester und Anhydride gehören;

(b) Olefincopolymeren mit Carboxyl- und/oder Carboxylatgruppen und abgeleitet von Ethylen und wenigstens einem α-Olefin mit 3 bis 6 Kohlenstoffatomen;

(c) Olefincopolymeren mit Carboxyl- und/oder Carboxylatgruppen und abgeleitet von Ethylen, wenigstens einem α-Olefin mit 3 bis 6 Kohlenstoffatomen und wenigstens einem nicht konjugierten aliphatischen Dien mit mindestens 6 Kohlenstoffatomen;

(d) Copolyesteramiden, erhalten aus (i) einer sauren Verbindung, umfassend 1 bis 100 Mol-% einer Disäure oder eines Derivats mit 15 bis 60 Kohlenstoffatomen und 0 bis 99 Mol-% mindestens eines anderen difunktionellen Reagens, ausgewählt unter den Disäuren, den Aminosäuren, den Hydroxysäuren und ihren ester- oder amidbildenden Derivaten, wobei diese Verbindungen eine Kohlenstoffatomanzahl von höchstens gleich 12 haben, (ii) einer Dihydroxylverbindung, die ein lineares, verzweigtes oder cyclisches Diol mit 2 bis 8 Kohlenstoffatomen und/oder eine makromolekulare Dihydroxylverbindung mit einem Molekulargewicht zwischen 500 und 5000 wie die Polyoxyethylenglykole, die Polytetrahydrofurane, die Polyoxypropylenglykole sein kann, und (iii) einer Aminverbindung, die mindestens ein Diamin und/oder mindestens einen Aminoalkohol mit einer Kohlenstoffatomanzahl höchstens gleich 25 umfasst, wobei die Verbindung (iii) weggelassen werden kann, falls die saure Verbindung (i) bereits ein Aminreagens enthält;

(e) Polyurethanen, erhalten aus (i) einem aliphatischen Polyester und/oder einem aliphatischen Polyether mit Hydroxylendgruppen mit einem Molekulargewicht zwischen 500 und 4000, (ii) einem aliphatischen Diol mit 2 bis 8 Kohlenstoffatomen, und gegebenenfalls einem Nitro-, Chlor-, Brom- oder Fluorsubstituenten und (iii) einem aromatischen Diisocyanat;

(f) Copolymeren mit Organopolysiloxan- und Polyurethansequenzen, erhalten durch Reaktion zwischen (i) einem Makrodiolpolysiloxan (oder einem Polysiloxan-Makrodiisocyanat), entstanden durch Reaktion zwischen einem α,ω-Hydrogenpolysiloxan der Formel:

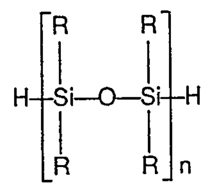

worin n eine Zahl zwischen 10 und 80 ist und die Substituenten R, die identisch oder verschieden sind, Methyl-, Vinyl- oder Phenylgruppen bedeuten, und einem primären ethylenischen Monoalkohol (oder einem ethylenischen Monoisocyanat) und (ii) einem kurzen Diol und einem kurzen Diisocyanat;

(g) Copolymeren von ungesättigten Monomeren, die mindestens eine elastomere Phase aufweisen, erhalten in Form von Teilchen mit Abmessungen zwischen 0,05 und 1,5 µm durch Emulsionspolymerisation aus einem Alkylacrylat, einem Alkylmethacrylat oder einem konjugierten aliphatischen Dien, mindestens einem ungesättigten Comonomeren, das Träger einer Carbonsäurefunktion oder Ableitung davon, Aminfunktion oder Ableitung davon, Nitrilfunktion, Sulfonsäurefunktion oder Derivat davon ist und gegebenenfalls mindestens einem anderen ethylenisch ungesättigten Comonomeren;

wobei die Menge an elastomerer Phase (2), die ein oder mehrere Elastomere umfassen kann, 4 bis 60 Gew.-% der Gesamtheit halbstarres Copolyamid (1) + elastomere Phase (2) beträgt.

2. Formmassen gemäss Anspruch 1, dadurch gekennzeichnet, dass die eingesetzten dimeren Säuren erhalten werden durch Polymerisation von Mischungen, die eine überwiegende Menge an monomeren Fettsäuren mit 16 bis 20 Kohlenstoffatomen und eine geringe Menge an monomeren Fettsäuren mit 8 bis 15 und/oder 21 bis 24 Kohlenstoffatomen enthalten, wobei diese dimeren Säuren eine Dimerenfraktion, grösser als 95 Gew.-%, und eine Monomerfraktion unterhalb 0,5 Gew.-% enthalten.

3. Formmassen gemäss einem der Ansprüche 1 und 2, dadurch gekennzeichnet, dass sie ausserdem neben dem halbstarren Copolyamid (1) und der elastomeren Phase (2) ein übliches Polyamid (3) enthalten, wobei die elastomere Phase (2) dann 4 bis 60 Gew.-% der Gesamtheit halbstarres Copolyamid (1) + elastomere Phase (2) + übliches Polyamid (3) beträgt, und die Menge an üblichem Polyamid (3) höchstens 50 Gew.-% der Gesamtheit Copolyamid (1) + übliches Polyamid (3) ausmacht.

4. Formmassen gemäss Anspruch 3, dadurch gekennzeichnet, dass das übliche Polyamid (3) ein Polyamid ist, erhalten durch Polykondensation von anderen Disäuren als die Fettsäuredimeren und Diaminen, durch Homopolykondensation von Aminosäuren oder Polymerisation von Lactamen.

5. Verfahren zur Herstellung der Massen gemäss einem der Ansprüche 1 bis 4, dadurch gekennzeichnet, dass man die verschiedenen Bestandteile in Pulver- oder Granulatform direkt vermischt, indem zuerst in einem klassischen Mischer kalt verknetet wird und dann das ganze homogenisiert wird, indem in der Wärme in einer Vorrichtung gearbeitet wird, die entsprechende Scherkräfte zu entwickeln vermag.

6. Verfahren zur Herstellung der Massen gemäss einem der Ansprüche 1 und 2, dadurch gekennzeichnet, dass man eine Grundmischung in Form von Granulat auf Basis eines Teils des halbstarren Copolyamids (1) und/oder des oder der Elastomeren (2) herstellt, wobei diese Grundmischung dann mit Granulaten des Rests des zu modifizierenden Copolyamids (1) vermischt wird.

7. Verfahren zur Herstellung der Massen gemäss einem der Ansprüche 3 und 4, dadurch gekennzeichnet, dass man eine Grundmischung in Form von Granulaten auf Basis des üblichen Polyamids (3) und des oder der Elastomeren (2) herstellt, wobei die Grundmischung dann mit Granulaten des halbstarren Copolyamids (1) vermischt wird.

8. Herstellungsverfahren gemäss Anspruch 7, dadurch gekennzeichnet, dass das übliche Polyamid (3), das zur Konfektionierung der Grundmischung verwendet wird, eine Polyaminosäure ist, hergestellt durch Homopolykondensation von Aminosäuren oder durch Polymerisation von Lactamen.

9. Als Mittel, das für die Durchführung des Verfahrens gemäss Anspruch 6 oder 7 bestimmt ist, eine Grundmischung, erhalten durch Dispersion von 30 bis 70 Gew.-%, bezogen auf das Gewicht der Grundmischung, des oder der Elastomeren (2) in 70 bis 30 Gew.-% halbstarrem Copolyamid (1) oder üblichem Polyamid (3).

10. Mittel gemäss Anspruch 9, dadurch gekennzeichnet, dass, falls ein übliches Polyamid (3) eingesetzt wird, man eine Polyaminosäure verwendet, die von der Homopolykondensation von Aminosäuren oder der Polymerisation von Lactamen stammt.

11. Formkörper, erhalten aus den Formmassen gemäss einem der Ansprüche 1 bis 4.

**Claims**

1. Polyamide-based moulding compositions having excellent flexibility and resilience characteristics, especially at temperatures as low as those ranging from 0°C to −40°C, characterized in that they comprise, by way of obligatory constituents:

(1) a semirigid copolyamide prepared:

- either from a fatty acid dimer, hexamethylenediamine and caprolactam, using a mixture comprising 5 to 60% by weight of a salt of a fatty acid dimer and of hexamethylenediamine and 95 to 40% by weight of caprolactam, the said salt being in the form of a solution in a particular solvent based on a mixture of water with an alcohol containing fewer than 5 carbon atoms, a water-caprolactam mixture or caprolactam itself, the stoichiometry of the said salt being strictly controlled by a pH measurement;

- of from a fatty acid dimer, adipic acid and hexamethylenediamine, care being taken that the molar ratio of adipic acid in relation to the total acids is between 0.5 and 0.99 and using a series of operations under temperature and pressure conditions that are chosen so as to obtain homogeneous copolymers exhibiting only a single phase in the molten state or in the solid state;

(2) and at least one elastomer containing blocks compatible with or reactive with the copolyamide (1), belonging to the group consisting of:

(a) olefinic copolymers derived from an aliphatic α-olefin containing from 2 to 6 carbon atoms and from at least one compound belonging to the class of α,β-unsaturated monocarboxylic or dicarboxylic acids containing from 3 to 8 carbon atoms, lower alkyl esters of these acids and anhydrides derived from these acids;

(b) olefinic copolymers containing carboxyl and/or carboxylate groups and derived from ethylene and from at least one α-olefin containing from 3 to 6 carbon atoms;

(c) olefinic copolymers containing carboxyl and/or carboxylate groups and derived from ethylene, from at least one α-olefin containing from 3 to 6 carbon atoms and from at least one non-conjugated aliphatic diene containing at least 6 carbon atoms;

(d) copolyesteramides obtained from (i) an acid compound containing 1 to 100 mol% of a diacid or derivative containing from 15 to 60 carbon atoms and 0 to 99 mol% of at least one other difunctional reactant chosen from diacids, amino acids, hydroxy acids and their derivatives which form esters or amides, these compounds containing a number of carbon atoms at most equal to 12, (ii) a dihydroxylic compound which may be a linear, branched or cyclic diol containing from 2 to 8 carbon atoms and/or a macromolecular dihydroxylic compound having a molecular weight of between 500 and 5,000, such as polyoxyethylene glycols, polytetrahydrofurans or polyoxypropylene glycols and (iii) an amine compound comprising at

least one diamine and/or at least one amino alcohol containing a number of carbon atoms at most equal to 25, it being possible to omit the compound (iii) in cases where the acid compound (i) already contains an amino reactant;
(e) polyurethanes obtained from (i) an aliphatic polyester and/or an aliphatic polyether with a terminal hydroxyl group and having a molecular weight of between 500 and 4,000 (ii) an aliphatic diol containing 2 to 8 carbon atoms and optionally a substituent of the nitro, chloro, bromo or fluoro type and (iii) an aromatic diisocyanate;
(f) organopolysiloxane and polyurethane block copolymers obtained by reaction between (i) a polysiloxane macrodiol (or polysiloxane macrodiisocyanate) produced by the reaction between an a,ω-hydropolysiloxane of the formula:

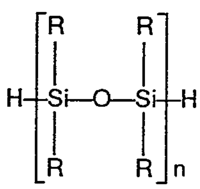

in which n is a number between 10 an 80 and the substituents R, which may be identical or different, represent methyl, vinyl or phenyl groups, with a primary ethylenic monoalcohol (or an ethylenic monoisocyanate) and (ii) a short diol and a short diisocyanate;
(g) copolymers of unsaturated monomers, exhibiting at least one elastomeric phase and obtained in the form of particles between 0.05 and 1.5 μm in size by emulsion polymerization of an alkyl acrylate, an alkyl methacrylate or of a conjugated aliphatic diene, of at least one unsaturated comonomer which carries a carboxylic acid group or derivative thereof, amine group or derivative thereof, nitrile group, sulphonic acid group or derivative thereof, and optionally of at least one other ethylenically unsaturated comonomer;
the quantity of elastomeric phase (2), which may comprise one or more elastomers, representing 4% to 60% of the weight of the combination of semirigid copolyamide (1) + elastomeric phase (2).

2. Compositions according to Claim 1, characterized in that the dimeric acids employed are obtained by polymerization of mixtures comprising a major quantity of monomeric fatty acids containing from 16 to 20 carbon atoms and a minor quantity of monomeric fatty acids containing from 8 to 15 and/or from 21 to 24 carbon atoms, the said dimeric acids containing more than 95% by weight of a dimer fraction and less than 0.5% by weight of a monomer fraction.

3. Compositions according to either of Claims 1 and 2, characterized in that they additionally contain a conventional polyamide (3) besides the semirigid copolyamide (1) and the elastomeric phase (2), the quantity of elastomeric phase (2) then representing 4% to 60% of the weight of the combination of semirigid copolyamide (1) + elastomeric phase (2) + conventional polyamide (3) and the quantity of conventional polyamide (3) representing at most 50% of the weight of the combination of copolyamide (1) + conventional polyamide (3).

4. Compositions according to Claim 3, characterized in that the conventional polyamide (3) is a polyamide obtained by polycondensation of diacids other than fatty acid dimers with diamines, by homopolycondensation of amino acids or by polymerization of lactams.

5. Process for the preparation of the compositions according to any one of Claims 1 to 4, characterized in that the various ingredients in the form of powder or granules are mixed directly, by first carrying out a cold kneading operation in a conventional mixer and then homogenizing the combination hot in a device capable of producing adequate shearing forces.

6. Process for the preparation of the compositions according to Claims 1 and 2, characterized in that a masterbatch in the form of granules is prepared from a part of the semirigid copolyamide (1) and/or from the elastomer(s) (2), this masterbatch subsequently being mixed with granules of the remainder of the copolyamide (1) to be modified.

7. Process for the preparation of the compositions according to either of Claims 3 and 4, characterized in that a masterbatch in the form of granules is prepared from the conventional polyamide (3) and the elastomer(s) (2), this masterbatch being subsequently mixed with granules of the semirigid copolyamide (1).

8. Process of preparation according to Claim 7, characterized in that the conventional polyamide (3) which is used to manufacture the masterbatch is a polyaminoacid produced by homopolycondensation of amino acids or by polymerization of lactams.

9. As means intended for carrying out the process according to Claim 6 or 7, a masterbatch obtained by dispersing 30 to 70% by weight, relative to the weight of the masterbatch, of the elastomer(s) (2) in 70 to 30% by weight of semirigid copolyamide (1) or of conventional polyamide (3).

10. Means according to Claim 9, characterized in that when a conventional polyamide (3) is used, a polyaminoacid produced by homopolycondensation of amino acids or by polymerization of lactams is employed.

11. Moulded articles obtained from the compositions according to any one of Claims 1 to 4.